# EUROPEAN PATENT SPECIFICATION

(11) **EP 1 557 315 B1**
(45) Date of publication and mention of the grant of the patent: **18.07.2007**
(21) Application number: 04100165.2
(22) Date of filing: 20.01.2004
(51) Int. Cl.: B60K 31/00, B60K 35/00

(54) **A display for vehicle speed control functions and a method for displaying vehicle speed control functions**
Verfahren und Vorrichtung zum Anzeigen von Geschwindigkeitsregelungsfunktionen
Procédé et dispositif d'affichage de fonctions de régulation de vitesse

(43) Date of publication of application: 27.07.2005
(73) Proprietor: Scania CV AB (publ), 151 87 Södertälje (SE)
(72) Inventor: Dillman, Martin, 111 38, Stockholm (SE); Thor, Patrik, 715 94, Odensbacken (SE)

(56) References cited:
- EP-B- 0 825 933
- WO-A-00/21773
- US-A- 6 116 369
- PATENT ABSTRACTS OF JAPAN , 12 December 2002 (2002-12-12) -& JP 2002 219970 A (NISSAN), 6 August 2002 (2002-08-06)

## Description

### TECHNICAL FIELD

The invention relates generally to vehicles and more specifically to a display for displaying speed control functions in vehicles, particularly trucks and busses. The invention also relates to a method for displaying vehicle speed control functions in a vehicle.

### BACKGROUND OF THE INVENTION

Many trucks and busses are equipped with three different speed control systems, namely a cruise control (CC) system, a downhill speed control system, and an adaptive cruise control (ACC) system.

In such vehicles, it is of great importance that the driver all the time is fully informed about how the different speed control systems are set and which speed control system is active for the moment, i.e. controls the speed of the vehicle.

US Patent No. 6,116,369 discloses a display that displays just two icons, namely one icon indicating that the vehicle is in Cruise Mode and another icon indicating that the vehicle is in Follow Mode. On the display according to US Patent No. 6,116,369, the driver is not informed about any settings in connection with the Cruise Mode and the Follow Mode. Moreover, the display is not adapted for display of downhill speed.

EP 0 876 936 A1 discloses a display with different more or less complicated icons and a button or a knob for ACC or distance control settings. A separate lever is provided for CC or speed control settings. The distances to a vehicle in front that can be set and displayed are rather coarse, namely either near, intermediate or far. Moreover, the display according to EP 0 876 936 A1 is not adapted for display of downhill speed.

EP 825 933 B discloses a display and a method according to the preambles of claims 1 and 7.

### SUMMARY OF THE INVENTION

The object of the invention is to bring about a display that in a simple manner integrates the display of the status of different vehicle speed control systems in order to make the display clearer to the driver.

This is attained by the display according to claim 1. The display comprises display fields for displaying status of a cruise control function and a downhill speed control function, respectively, and the display fields comprise icons specific to the respective control function, numeric values corresponding to set values of speed limits for the respective control function, and symbols indicating whether the control function in question is controlling the speed of the vehicle or not.

If the vehicle is provided with an adaptive cruise control system, the display according to the invention comprises a further display field for displaying status of that control function, and that further display field comprises an icon specific to the adaptive cruise control function, a numeric value corresponding to a set value of a time gap to a vehicle in front, and a symbol indicating whether the adaptive cruise control function is controlling the vehicle speed or not.

It is preferable that the display fields are located side by side on the display and that the icon, the numeric value and the symbol of each display field are located vertically above one another.

Preferably, the icon is located above the numeric value that in its turn is located above the symbol.

Hereby, a display that gives a driver a clear picture of the status of the different speed control systems is obtained.

Another object of the invention is to achieve a user-friendly and safe method for displaying vehicle speed control functions in a vehicle.

This is attained by the method according to the invention, which makes it easy for the driver to set the preferred speed control values, with simple operations, and then on the display see the set values and which control system that is in control for the moment.
This results in a safe method for setting and displaying information in the vehicle, which does not distract the driver.

### BRIEF DESCRIPTION OF THE DRAWING

The invention will be described more in detail below with reference to the appended drawings on which:
Fig. 1 shows an embodiment of a display according to the invention and
Fig. 2 shows a flow chart for setting and displaying of speed control functions according to the invention.

### DESCRIPTION OF THE INVENTION

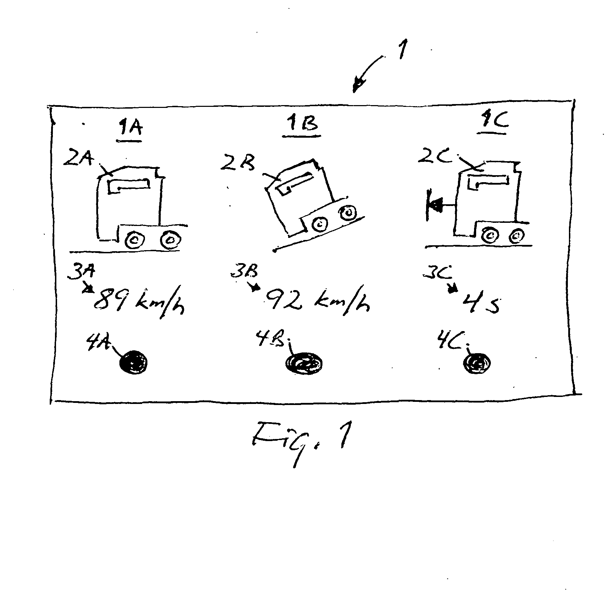

Fig. 1 shows an embodiment of a display 1 according to the inve ntion in a vehicle, e.g. a truck or bus.

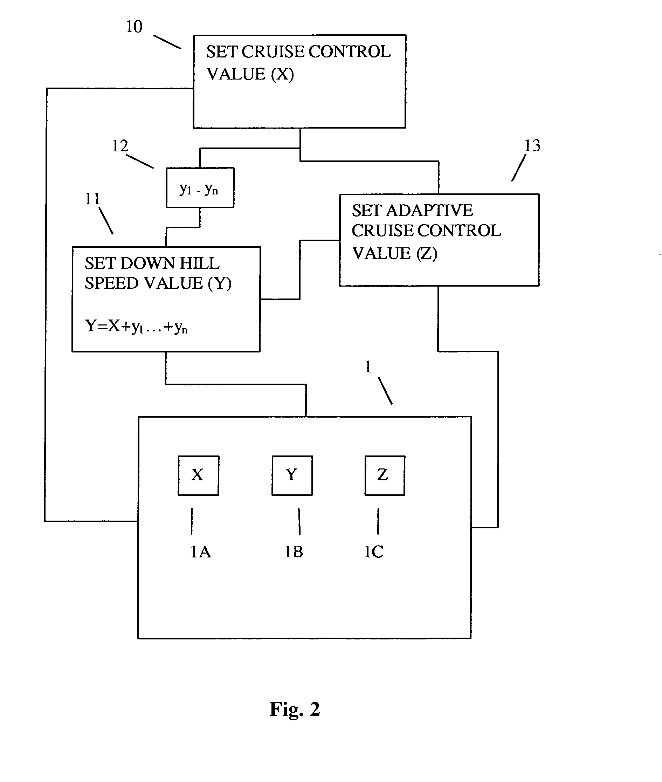

Fig. 2 shows a flow chart of a method for setting and displaying of speed control functions according to the invention.

The shown embodiment of the display 1 comprises three display fields 1A, 1B and 1C.

In accordance with the invention, the display fields 1A, 1B, 1C are located side by side on the display 1.

In the shown embodiment, display field 1A is adapted to display status of a cruise control function of the vehicle, i.e. a function that controls the speed of the vehicle in such a manner that a set speed value as set by the driver is maintained. The cruise control speed (X) is set in conventional way known in the art (10). Display field 1B is adapted to display status of a downhill speed control function of the vehicle, i.e. a function that controls the speed of the vehicle in such a manner when it travels downhill that a set speed value (Y) as set by the driver cannot be exceeded. This set speed is equal or greater than the set speed of the cruise control and makes it possible to let the vehicle travel with greater speed downhill. The maximum allowable speed downhill (Y) is set by the driver by a control (for example a button or a lever) (11). Preferably this is done in a way where the preferred divergence from the cruise control speed is set in steps (y) by pushing a button (12). One push on the button can for example add 3 km/h to the cruise control speed, thus letting the vehicle travelling downhill at a maximum speed that is 3 km/h greater than the set cruise control speed. If the set cruise control speed is 89 km/h the downhill speed will then be set to 92 km/h. If the driver wants to increase the maximum allowable down hill speed more, a further push on the button adds another 3 km/h to the set downhill speed. The downhill speed is preferably settable in a range from 0 to 15 km/h greater than the set cruise control speed. Though the allowable increase in downhill speed is preferably set in steps (for example an increase of 1km/h or 3 km/h or 5 km/every time the button is pushed), it can also be set continuous by for example a turnable knob. Display field 1C is adapted to display status of an adaptive cruise control function of the vehicle, i.e. a function that by means of a radar device controls the distance to a vehicle in front in such a manner that an allowable time gap to the vehicle in front as set by the driver is maintained. The driver set a minimum allowable time gap (Z) to the vehicle in front, which represents a distance to the vehicle in front (13). This function prevents the vehicle from coming to close to the vehicle in front. With a set time gap the distance to the vehicle in front increases when the vehicle speed increases. This way the adaptive cruise control works in a safe way irrespective of the speed.

It is to be understood that if the vehicle is not equipped with all three control systems, the corresponding display field will not be present on the display 1.

In accordance with the invention, that the display fields 1A, 1B, 1C all include respective icons 2A, 2B, 2C that are specific to the respective control function. In the embodiment in Fig. 1, merely examples of such icons are shown. In practice, standardized icons will be used to display the respective control function on the display 1.

Also in accordance with the invention, numeric values 3A, 3B, 3C corresponding to set limit values for the respective control function as set by the driver are located below the corresponding icon 2A, 2B, 2C.

Thus, the numeric value 3A, i.e. 89 km/h in the embodiment in Fig. 1, represents the set cruise speed value as set by the driver. The numeric value 3B, i.e. 92 km/h in the embodiment in Fig. 1, represents the set maximum allowable speed of the vehicle as set by the driver when the vehicle travels downhill. Alternatively the maximum allowable speed increase of the vehicle (as set by the driver) when it travels downhill can be shown below icon 2B, for example +3 km/h. The numeric value 3C, i.e. 4 s in the embodiment in Fig. 1, represents the set time gap to a vehicle in front as set by the driver.

Moreover in accordance with the invention, symbols 4A, 4B, 4C are located below the respective numeric value 3A, 3B, 3C. These symbols 4A, 4B, 4C shown as small dots in the embodiment in Fig. 1 indicate, e.g. by lighting up, whether the corresponding control function is controlling the speed of the vehicle for the moment or not.

It is to be understood that the symbols 4A, 4B, 4C do not necessarily have to be dots but can be e.g. squares, rings, lines etc. In one embodiment there can be LEDs located below the respective numeric values 3A, 3B, 3C. When a LED is lit it indicates that the corresponding control function is controlling the speed.

All three control functions can be active simultaneously, but it is only one function at a time that is controlling the speed. If values for all three functions are set by the driver and thus all three functions are active, for example 89 km/h for the cruise control, 92 km/h for the downhill speed control and 4 s for the adaptive cruise control, the vehicle travels at 89 km/h on the motorway as long as there is no downhill slope or any vehicle in front; i.e. the cruise control function is controlling the speed. When the vehicle reaches a downhill slope the downhill speed control takes over and the vehicle is allowed to travel at 92 km/h downhill. When the downhill slope is over the cruise control takes over again. When the radar device spots a vehicle in front, the adaptive cruise control takes over and see to that the time gap between the vehicles is maintained. When the view is clear in front of the vehicle again the cruise control takes over and controls the speed again.

Of course only one or two of the control functions can set by the driver and thus active. Hence the cruise control function must be active in order to use the other two speed control functions.

In the display fields 1A, 1B, 1C, the icons 2A, 2B, 2C are preferably located above the numeric values 3A, 3B, 3C that in their turn preferably are located above the symbols 4A, 4B, 4C as shown in Fig. 1 but that order is in no way mandatory.

The display according to the invention as described above offers the driver a very good overall view of the different speed control functions of the vehicle.

## Claims

1. A display for displaying vehicle speed control functions in a vehicle, wherein the display (1) comprises display fields (1A, 1B) for displaying at the same time status of a cruise control function and a downhill speed control function, respectively,
**characterized in that** the display fields (1A, 1B) comprise icons (2A, 2B) specific to the respective control function, numeric values (3A, 3B) corresponding to set values of speed limits for the respective control function.

2. The display according to claim 1, **characterized in that** it comprises a further display field (1C) for displaying status of an adaptive cruise control function, and that the further display field (1C) comprises an icon (2C) specific to the adaptive cruise control function, a numeric value (3C) corresponding to a set value of a time gap to a vehicle in front.

3. The display according to claim 1 or 2, **characterized in that** the display comprises symbols (4A, 4B, 4C) for indicating whether the control function in question is controlling the speed of the vehicle or not.

4. The display according to claim 1 or 2 or 3, **characterized in that** the display fields (1A, 1B, 1C) are located side by side on the display (1).

5. The display according to any of claims 3-4, **characterized in that** the icon (2A, 3B, 2C), the numeric value (3A, 3B, 3C) and the symbol (4A, 4B, 4C) of each display field (1A, 1B, 1C) are located vertically above one another.

6. The display according to claim 4, **characterized in that** the icon (2A, 2B, 2C) is located above the numeric value (3A, 3B, 3C) that in its turn is located above the symbol (4A, 4B, 4C).

7. Method for displaying vehicle speed control functions on a display, comprising display fields (1A, 1B, 1C), in a vehicle comprising the steps of:
- setting a preferred fixed speed (cruise control speed) value (X) (3A) for the vehicle (10),
- setting a downhill speed value (Y) that is equal or greater than said fixed speed (11), which downhill speed cannot be exceeded when the vehicle travels downhill
**characterized in** the steps of:
- displaying the cruise control speed on a first display field (1A) including an icon (2A) that is specific to the cruise control function,
- displaying at the same time information (3B) about the downhill speed value on a second display field (1B) including an icon (2B) that is specific to the downhill speed control function.

8. The method according to claim 7 **characterized in that** the downhill speed value is set stepwise (12) by a control, where each step represent an increase in speed compared to the fixed speed (cruise control speed), wherein the allowable down hill speed can be set to a value 0-15 km/h higher than the fixed speed.

9. The method according to claim 8 **characterized in that** the downhill speed value is set in steps (y) of 3 km/h.

10. The method according to any of claim 7-9 **characterized in that** the value of the set maximum allowable downhill speed (Y) is displayed on the display (1).

11. The method according to any of claim 7-9 **characterized in that** the value of the set maximum allowable increase in speed (y) when the vehicle travels downhill is displayed on the display (1).

12. The method according to any of claim 7-11 **characterized in** the step of
- setting a time gap (Z) to a vehicle in front (13), which time gap is maintained by means of a radar device controlling the distance to the vehicle in front and displaying the set time gap (3C) on the display.

13. The method according to any of claim 7-12 **characterized in that** the display is the display according to any of claims 1-6.

## Patentansprüche

1. Anzeige zum Anzeigen von Fahrzeuggeschwindigkeitsregelungsfunktionen in einem Fahrzeug, wobei die Anzeige (1) Anzeigefelder (1A, 1B) zum gleichzeitigen Anzeigen jeweils eines Status einer Fahrtregelungsfunktion und einer Bergabgeschwindigkeitsregelungsfunktion umfasst,
**dadurch gekennzeichnet, dass** die Anzeigefelder (1A, 1B) für die jeweilige Regelungsfunktion spezifische Piktogramme, numerische Werte (3A, 3B), die eingestellten Werten von Geschwindigkeitsgrenzen für die zugehörige Regelungsfunktion entsprechen, umfassen.

2. Anzeige nach Anspruch 1, **dadurch gekennzeichnet, dass** sie ein weiteres Anzeigefeld (1C) zum Anzeigen eines Zustands einer adaptiven Geschwindigkeitsregelungsfunktion umfasst, und dass das weitere Anzeigefeld (1C) ein für die adaptive Geschwindigkeitsregelungsfunktion spezifisches Piktogramm (2C), einen numerischen Wert (3C), der einem eingestellten Wert eines Zeitabstands zu einem vorderen Fahrzeug entspricht, umfasst.

3. Anzeige nach Anspruch 1 oder 2, **dadurch gekennzeichnet, dass** die Anzeige Symbole (4A, 4B, 4C) zum Anzeigen umfasst, ob die fragliche Regelungsfunktion die Geschwindigkeit des Fahrzeugs regelt oder nicht.

4. Anzeige nach Anspruch 1 oder 2 oder 3, **dadurch gekennzeichnet, dass** die Anzeigefelder (1A, 1B, 1C) nebeneinander auf der Anzeige (1) angeordnet sind.

5. Anzeige nach einem der Ansprüche 3 - 4, **dadurch gekennzeichnet, dass** das Piktogramm (2A, 3B, 2C), der numerische Wert (3A, 3B, 3C) und das Symbol (4A, 4B, 4C) jedes Anzeigefeldes (1A, 1B, 1C) vertikal übereinander angeordnet sind.

6. Anzeige nach Anspruch 4, **dadurch gekennzeichnet, dass** das Piktogramm (2A, 2B, 2C) über dem numerischen Wert (3A, 3B, 3C) angeordnet ist, der wiederum über dem Symbol (4A, 4B, 4C) angeordnet Ist.

7. Verfahren zum Anzeigen von Fahrzeuggeschwindigkeitsregelungsfunktionen auf einer Anzeigefelder (1A, 1B, 1C) umfassenden Anzeige in einem Fahrzeug, die Schritte umfassend:
- Einstellen eines bevorzugten festgelegten Geschwindigkelts-(Fahrtregelungsgeschwindigkeits-)Wertes (X) (3A) für das Fahrzeug (10),
- Einstellen eines Bergabgeschwindigkeitswertes (Y), der gleich der oder größer als die festgelegte Geschwindigkeit ist (11), wobei die Bergabgeschwindigkeit nicht überschritten werden kann, wenn das Fahrzeug bergab fährt,
**gekennzeichnet durch** die Schritte:
- Anzeigen der Fahrtregelungsgeschwindigkeit auf einem ersten Anzeigefeld (1A), welches ein Piktogramm (2A) umfasst, das für die Fahrtregelungsfunktion spezifisch ist,
- gleichzeitiges Anzeigen von Informationen (3B) über den Bergabgeschwindigkeitswert auf einem zweiten Anzeigefeld (1B), welches ein Piktogramm (2B) umfasst, das für die Bergabgeschwindigkeitsregelungsfunktion spezifisch ist.

8. Verfahren nach Anspruch 7, **dadurch gekennzeichnet, dass** der Bergabgeschwindigkeitswert durch eine Steuereinrichtung schrittweise (12) eingestellt wird, wobei jeder Schritt eine Geschwindigkeitsvergrößerung verglichen mit der festgelegten Geschwindigkeit (Fahrtregelungsgeschwindigkeit) darstellt, wobei die erlaubte Bergabgeschwindigkeit auf einen Wert 0-15 km/h höher als die festgelegte Geschwindigkeit eingestellt werden kann.

9. Verfahren nach Anspruch 8, **dadurch gekennzeichnet, dass** der Bergabgeschwindigkeitswert in Schritten (y) von 3 km/h eingestellt wird.

10. Verfahren nach einem der Ansprüche 7 bis 9, **dadurch gekennzeichnet, dass** der Wert der eingestellten maximalen erlaubten Bergabgeschwindigkeit (Y) auf der Anzeige (1) angezeigt wird.

11. Verfahren nach einem der Ansprüche 7 bis 9, **dadurch gekennzeichnet, dass** der Wert der eingestellten maximalen erlaubten Geschwindigkeitserhöhung (y), wenn das Fahrzeug bergab fährt, auf der Anzeige (1) angezeigt wird.

12. Verfahren nach einem der Ansprüche 7 bis 11, **gekennzeichnet durch** den Schritt:
- Einstellen eines Zeitabstands (Z) zu einem vorderen Fahrzeug (13), wobei der Zeitabstand vermittels einer Radareinrichtung eingehalten wird, die den Abstand zu dem vorderen Fahrzeug kontrolliert und den eingestellten Zeitabstand (3C) auf der Anzeige anzeigt.

13. Verfahren nach einem der Ansprüche 7 bis 12, **dadurch gekennzeichnet, dass** die Anzeige die Anzeige nach einem der Ansprüche 1 bis 6 ist.

## Revendications

1. Ecran pour l'affichage dans un véhicule de fonctions de régulation de vitesse du véhicule, où l'écran (1) comprend des champs d'affichage (1A, 1B) pour l'affichage respectif simultané de l'état d'une fonction de régulation de vitesse de croisière et d'une fonction de régulation de vitesse en descente, **caractérisé en ce que** les champs d'affichage (1A, 1B) comprennent des icones (2A, 2B) spécifiques de la fonction de régulation respective, des valeurs numériques (3A, 3B) correspondant à des valeurs réglées des limites de vitesse pour la fonction de régulation respective.

2. Ecran selon la revendication 1, **caractérisé en ce qu'**il comprend un champ d'affichage supplémentaire (1C) pour l'affichage de l'état d'une fonction de régulation de vitesse de croisière adaptative, et **en ce que** le champ d'affichage supplémentaire (1C) comprend une icône (2C) spécifique de la fonction de régulation de vitesse de croisière adaptative, une valeur numérique (3C) correspondant à une valeur réglée d'un intervalle temporel avec un véhicule de devant.

3. Ecran selon la revendication 1 ou 2, **caractérisé en ce que** l'affichage comprend des symboles (4A, 4B, 4C) destinés à indiquer si la fonction de régulation en question est ou non en train de réguler la vitesse du véhicule.

4. Ecran selon la revendication 1 ou 2 ou 3, **caractérisé en ce que** les champs d'affichage (1A, 1B, 1C) sont situés côte à côte sur l'écran (1).

5. Ecran selon l'une quelconque des revendications 3 à 4, **caractérisé en ce que** l'icône (2A, 2B, 2C), la valeur numérique (3A, 3B, 3C) et le symbole (4A, 4B, 4C) de chaque champ d'affichage (1A, 1B, 1C) sont situés verticalement les uns au-dessus des autres.

6. Ecran selon la revendication 4, **caractérisé en ce que** l'icône (2A, 2B, 2C) est située au-dessus de la valeur numérique (3A, 3B, 3C), qui est quant à elle située au-dessus du symbole (4A, 4B, 4C).

7. Procédé pour l'affichage dans un véhicule de fonctions de régulation de vitesse d'un véhicule, sur un écran comprenant des champs d'affichage (1A, 1B, 1C), le procédé comprenant les étapes qui consistent à :
- régler une valeur de vitesse fixée préférée (vitesse du régulateur de vitesse de croisière) (X) (3A) pour le véhicule (10),
- régler une valeur de vitesse en descente (Y) qui est égale ou supérieure à ladite vitesse fixée (11), laquelle vitesse en descente ne peut pas être dépassée lorsque le véhicule se déplace en descente,
**caractérisé par** les étapes qui consistent à :
- afficher la vitesse du régulateur de vitesse de croisière dans un premier champ d'affichage (1A), comprenant une icône (2A) qui est spécifique de la fonction de régulation de vitesse de croisière,
- afficher simultanément des informations (3B) concernant la valeur de la vitesse en descente, dans un deuxième champ d'affichage (1B) comprenant une icône (2B) qui est spécifique de la fonction de régulation de vitesse en descente.

8. Procédé selon la revendication 7, **caractérisé en ce que** la valeur de la vitesse en descente est réglée de manière incrémentielle (12) par une commande, où chaque incrément représente une augmentation de vitesse par rapport à la vitesse fixé (vitesse du régulateur de vitesse croisière), où la vitesse en descente admissible peut être réglée à une valeur de 0 à 15 km/h supérieure à la vitesse fixée.

9. Procédé selon la revendication 8, **caractérisé en ce que** la valeur de la vitesse en descente est réglée par incréments (y) de 3 km/h.

10. Procédé selon l'une quelconque des revendications 7 à 9, **caractérisé en ce que** la valeur de la vitesse en descente maximale admissible réglée (Y) est affichée sur l'écran (1).

11. Procédé selon l'une quelconque des revendications 7 à 9, **caractérisé en ce que** la valeur de l'augmentation de vitesse maximale admissible réglée (y) lorsque le véhicule se déplace en descente est affichée sur l'écran (1).

12. Procédé selon l'une quelconque des revendications 7 à 11, **caractérisé par** les étapes de réglage d'un intervalle temporel (Z) avec le véhicule de devant (13), lequel intervalle temporel est maintenu au moyen d'un dispositif radar commandant la distance avec le véhicule de devant, et d'affichage de l'intervalle temporel réglé (3C) sur l'écran.

13. Procédé selon l'une quelconque des revendications 7 à 12, **caractérisé en ce que** l'écran est l'écran selon l'une quelconque des revendications 1 à 6.
